# EUROPEAN PATENT APPLICATION

(11) **EP 0 951 157 A1**
(43) Date of publication of application: **20.10.1999**
(21) Application number: 98202203.0
(22) Date of filing: 30.06.1998
(51) Int. Cl.: H04L 29/06

(54) **Multimedia subscriber network**

(30) Priority: 17.04.1998 NL 1008922
(71) Applicant: Koninklijke KPN N.V., 9726 AE Groningen (NL)
(72) Inventor: Wentink, Maarten Menzo, 2264 XZ Leidschendam (NL); Hermans, Joost, 2264 XZ Leidschendam (NL)

(57) **Abstract**

Multimedia system, comprising a public IP-based multimedia network (1) and an access network for connecting local subscriber's premises (8). The access network is an IP-based local access network (2), being connected to one or more IP network nodes (6) and to local IP nodes (3) in the direct neighbourhood of the subscribers' premises (8). Said nodes may be IP routers. One local IP node (3) may serve one or more local subscriber's premises. The local subscriber's premises comprise at least one IP connection terminal (4a/4b), connected to said local IP node (3), to which IP connection terminal subscriber apparatuses (5) can be connected. The connection terminal may consist in a connection socket and a connection plug. An IP home network (9), to which various subscriber apparatuses are connectable, may be connected to said local node (3). The IP home network (9) may comprise one or more nodes (10).

## Description

### BACKGROUND OF THE INVENTION

The invention relates to a multimedia subscriber network, to be connected to an internet protocol (IP) based public multimedianetwork.

At this moment, private subscribers (users), can connect themselves to a public multimedianetwork like "internet" by means of the "local loop" of the conventional public telecommunications infrastructure (PSTN or ISDN) and an internet access server. At the subscriber's side, IP related signals output by subscriber's multimedia clients like browser or e-mail modules in the subscriber's terminal (PC or NC or the like), are converted into PSTN or ISDN related signals and vice versa. Said conversion is done by a subscriber's dialling software module in cooperation with a connected PSTN modem or ISDN card. At the multimedia network's side, signals, received from the subscribers, are converted back by a "modem pool" and related software at the access server's side, into IP related signals.

A drawback of the present architecture --the conventional local loop and the access servers-- for multimedia applications --"internet surfing", IP telephony, IP video on demand etc.-- is that it is a non-IP architecture, based on voice and small band data transmission.

Moreover the local access network consists in network elements which are owned or controlled by different parties, viz. the telecommunications operator(s) and various Internet Service Providers (ISPs), each having its own local calling-in points.

Nowadays' developments are pointing to IP based multimedia networks as a new basis for a great variety of point-to-point and point-to-multipoint communications, including telephony, video-on-demand, electronic mail, information retrieval, chatting, electronic commerce and many other applications.

### SUMMARY OF THE INVENTION

The invention provides a public, IP-based access network between the various subscribers and the public IP-based multimedia network, said IP-based access network being meant to replace --for IP-based communications-- the present local PSTN/ISDN and access servers of the ISPs. As a result of the invention, subscribers may have one multimedia service connector at home, the "IP plug" for all services via IP.

According to the present invention, a subscriber is connected to a domestic IP network node, having its own IP adress. The network node at its turn is connected to a local IP access network and the local network is connected to a national IP network (like in the Netherlands the nation-wide IP network of KPN, "HetNet") or to a global IP network like the internet or "world wide web".

The subscriber may be connected to the domestic IP node by means of an IP wall socket and plug, comparable with the conventional home telephone plug and wall socket connection. The subscriber's home apparatuses --PC's or NC's, IP telephones, WebTV's etc.-- may be connected to the IP access network by means of an IP based home network. In this way, the connectionless character of IP can fully be exploited from the user's apparatuses and software applications, via, consecutive, the IP home network, the domenstic node, the local IP access network and in the national and global IP network and vice versa. It is noted that the domestic node preferrably may comprise a "fire wall" against unwanted outside access to the home network. Said domestic IP node may be implemented by a rather simple IP router. If the domestic (home) network expands, more of such nodes may be incorporated.

### EXEMPLARY EMBODIMENTS

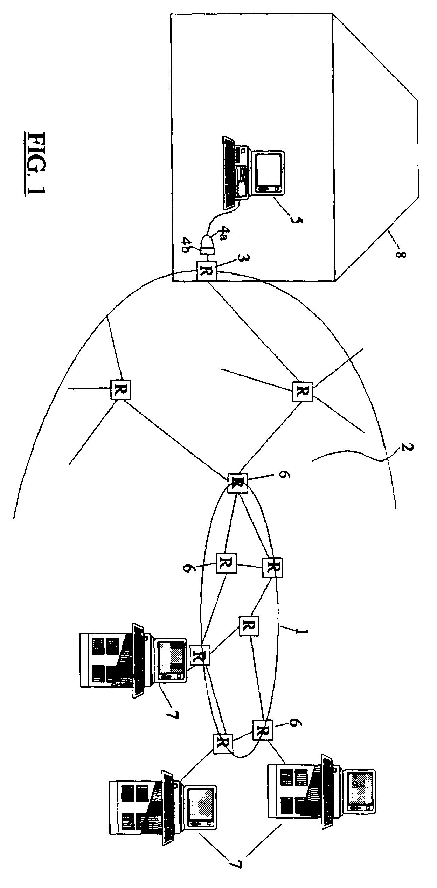

Figure 1 shows a scheme of a public IP based network 1, including routers 6 (R) and, connected thereto, a local multimedia network 2, also including routers 6 (R), as proposed by the present invention, and a home system S, via a local router 3(R) and an IP network connection 4a/4b. The public IP network 1 may be a conventional (hardware) routed network in combination with RSVP, satisfying the high QoS requirement and applying the guiding principle of using IP routing wherever possible. Classical routing is used, upgraded from software to hardware in order to reach a very high routing performance. In the physical layer, SDH transports IP packets, which are put into SDH Virtual Containers by the Point to Point Protocol (PPP).
   At present, in the local network 2 ADSL modems (not shown) may be used in order to provide the required bandwidth (several Mb/s) over the (present) copper infrastructure. Both ATM and Ethernet over ADSL modems can be used. In either case, the datalink layer (e.g. Ethernet or ATM) will be used exclusively to transport IP packets; no switching functionality will be implemented here. The desired network performance is achieved at the IP layer by using protocols for QoS support like RSVP, and protocols for IP Multicasting. This means all network elements will either have to support the (OSI) layer three functionality used to achieve the required QoS, or leave it undisturbed.

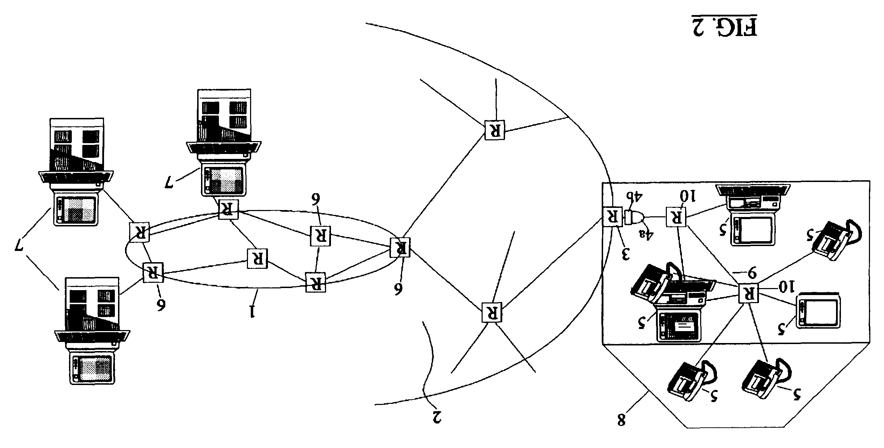

Figure 2 shows a home network 9, connected to local IP router 3 via IP connection 4a/4b and further consisting of in-house IP routers 10 and IP oriented or IP adapted domestic terminals 5.

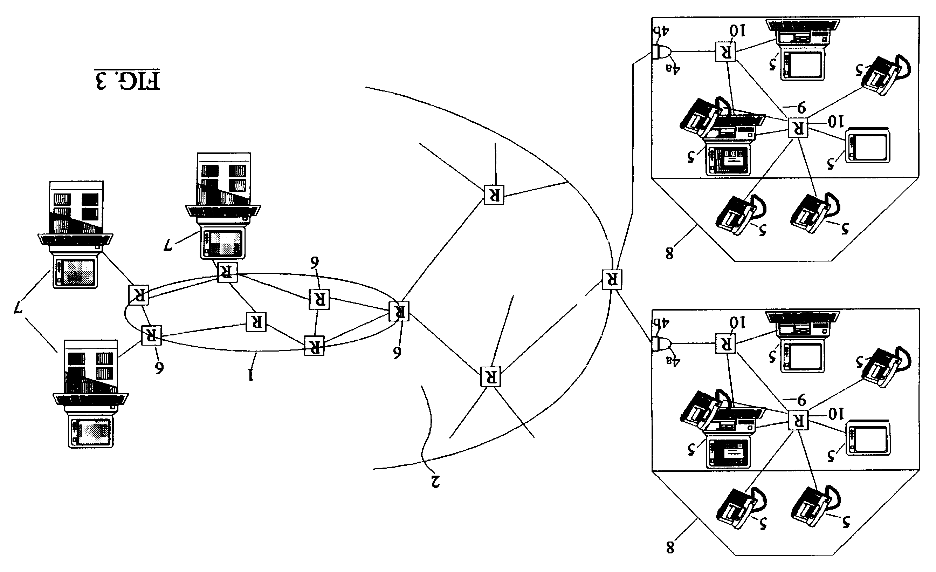

It is noted that each local router 3 may serve either only one home (domestic) network, or more than one home network. In the first case the local router 3 may be placed within the subscriber's premises, in the latter case, het local router 3 is placed, in a "curb" in de direct neighbourhood of the a couple of subscriber's premises; this option has been illustrated in figure 3.

## Claims

1. Multimedia system, comprising a public IP-based multimedia network (1) and an access network for connecting local subscriber's premises to said public multimedia network, **characterized in** that said access network is an IP-based local access network (2), being connected, at the public multimedia network's side, to one or more IP network nodes (6) of said public multimedia network (1) and, at the subscribers' side, to local IP nodes (3) in the direct neighbourhood of the subscribers' premises (8).

2. Multimedia system according to claim 1, **characterized in** that said nodes (3) at the subscriber's premises (8) are IP routers.

3. Multimedia system according to claim 1, **characterized in** that one local IP node (3) serves one local subscriber's premises.

4. Multimedia system according to claim 1, **characterized in** that one local IP node (3) serves more than one local subscriber's premises.

5. Multimedia system according to claim 3 or 4, **characterized in** that the local subscriber's premises comprise at least one IP connection terminal (4a), connected to said local IP node (3), to which IP connection terminal subscriber apparatuses (5) can be connected.

6. Multimedia system according to claim 5, **characterized in** that said connection terminal (4) consists in a connection socket and a connection plug.

7. Multimedia system according to claim 1, **characterized in** an IP home network (9), to which various subscriber apparatuses are connectable, the IP home network being connected to said local node (3).

8. Multimedia system according to claim 7, **characterized in** that the IP home network (9) comprises one or more IP nodes (10).
